# EUROPÄISCHE PATENTSCHRIFT

(11) **EP 0 677 350 B1**
(45) Veröffentlichungstag und Bekanntmachung des Hinweises auf die Patenterteilung: **04.03.1998**
(21) Anmeldenummer: 95100462.1
(22) Anmeldetag: 14.01.1995
(51) Int. Cl.: B23C 5/22

(54) **Schneidplatte, insbesondere Wendeschneidplatte**
Cutting insert, in particular indexable cutting insert
Plaquette de coupe, en particulier plaquette de coupe indexable

(30) Priorität: 01.04.1994 DE 4411475
(43) Veröffentlichungstag der Anmeldung: 18.10.1995
(73) Patentinhaber: WALTER AG, D-72072 Tübingen (DE)
(72) Erfinder: Bohnet, Siegfried, D 72116 Mössingen (DE); Dürr, Hans Peter, D 72810 Gomaringen-Stockach (DE)
(74) Vertreter: Rüger, Rudolf, Dr.-Ing.

(56) Entgegenhaltungen:
- DE-A- 3 600 077
- US-A- 5 199 827

## Beschreibung

Die Erfindung betrifft eine Schneidplatte, insbesondere Wendeschneidplatte, insbesondere aus Hartmetall und ein mit solchen Schneidplatten bestücktes rundlaufendes spanabhebendes Werkzeug, insbesondere ein Bohr- oder Fräswerkzeug.

Für die Bearbeitung von metallischen Werkstücken, bei denen es darauf ankommt, zwischen der Schnittfläche am Werkstück und der Planfläche einen genau definierten Winkel - in der Regel von 90° - zu erzeugen, werden sogenannte Eckfräser verwendet, die in der Praxis häufig mit dreieckförmigen oder rhombischen Wendeschneidplatten bestückt sind. Die Zahl der nacheinander abarbeitbaren Hauptschneidkanten ist damit auf drei bzw. zwei beschränkt. Mit zwei nacheinander abarbeitbaren Hauptschneidkanten ist auch eine rechteckige Wendeschneidplatte ausgebildet, die aus der EP 0 392 730 A2 bzw. der EP 0 392 739 A2 bekannt ist und bei der die Hauptschneidkante entsprechend der Verschneidungslinie eines den Flugkreis enthaltenden, gedachten Zylinders mit einer schräg liegenden Ebene gekrümmt ist, so daß der Spanwinkel und der Freiwinkel in Einbaulage über die gesamte Schneidkantenlänge im wesentlichen konstant sind. Bei dieser Wendeschneidplatte treten im Eckenbereich Schneidkantenabschnitte mit verhältnismäßig kleinen zugeordnetem Keilwinkel auf, mit oder Folge, daß die Eckenbereiche bei hoher Beanspruchung bruchgefährdet sind. Eine andere Ausführungsform arbeitet mit negativen Axialwinkel in der Nähe der Werkzeugstirn, was im Hinblick auf die Spanbildung und -lenkung sowie des Auftretens hoher Axialkräfte unerwünscht ist.

Daneben ist aus der US-PS 5 199 827 eine Wendeschneidplatte mit quadratischer Grundfläche bekannt, die vier nacheinander abarbeitbare Hauptschneidkanten aufweist und dazu bestimmt ist, mit positivem Axialwinkel und negativen Radialwinkel in den Werkzeugkörper eines Eckfräsers eingesetzt zu werden. Jeder Hauptschneidkante ist bei dieser Wendeschneidplatte eine Neben- oder Planschneidkante zugeordnet, die sich über einen Eckschneidkantenabschnitt an die jeweilige Hauptschneidkante anschließt. Die Anordnung ist dabei derart getroffen, daß an jeder der Ecken eine Nebenschneidkante mit einer Hauptschneidkante einen Winkel einschließt, der größer als 90° ist.

Diese Patentschrift zeigt auch eine Schneidplatte gemäß dem Oberbegriff des Anspruches 1 und ein Werkzeug gemäß dem Oberbegriff des Anspruches 34

In Einbaulage arbeiten diese Wendeschneidplatten mit einem verhältnismäßig großen negativen Radialwlnkel. Um jedoch einen positiven Spanwinkel in Einbaulage zu erreichen, muß die Spanmulde der WSP entsprechend gestaltet werden, mit der Folge, daß sich an den Wendeschneidplatten selbst ein verhältnismäßig schwacher Schneidkeil mit tiefen Spanmulden ergibt. Es müssen deshalb u.a. in Eckenbereich Verstärkungsrippen vorgesehen werden.

Außerdem ist aus der EP-B1 0 358 623 eine Wendeschneidplatte bekannt, bei der die in einer Ebene liegende Spanfläche mit einer abgeschrägten Fläche versehen ist, welche sich entlang zumindest einer Hauptschneidkante erstreckt und die im Prinzip schraubenförmig derart gekrümmt ist, daß der gegen eine Mittelebene gemessene Neigungswinkel an der Ecke größer als im Abstand von der Ecke ist. Die streifenartige abgeschrägte Fläche erstreckt sich von einer Nebenschneidkante an der Ecke zumindest über die halbe Länge der zugeordneten Hauptschneidkante. Ihre Breite entspricht der Länge der quer zu ihr orientierten Nebenschneidkante. Die sich über einen Großteil der Länge der Hauptschneide erstreckende abgeschrägte Fläche führt aber deshalb zu einer Verschlechterung der Schnittbedingungen, weil bezogen auf die zur Auflagefläche parallele Spanfläche in den abgeschrägten Bereich größere Neigungswinkel entstehen, die zu einer Verkleinerung des Spanwinkels führen, mit der Folge, daß größere Schnittkräfte und damit eine erhöhte Zerspanungsleistung auftreten.

Aufgabe der Erfindung ist es, eine vorzugsweise quadratische oder rechteckige Echneidplatte, insbesondere Wendeschneidplatte zu schaffen, bei der ohne eine ins Gewicht fallende Vergrößerung er Schnittleistung, insbesondere in den Eckenbereichen bruchgefährdete Stellen vermieden sind, wobei sie sich durch eine zerspanungstechnisch günstige Schneidengeometrie auszeichnet und ohne weiteres eine Ausbildung mit vier nacheinander abarbeitbaren Hauptschneidkanten erlaubt, denen jeweils Neben- oder Planschneidkanten zugeordnet sind, so daß sich eine hervorragende Oberflächenqualität auch auf der Planseite ergibt. Außerdem ist es Aufgabe der Erfindung, ein mit solchen Wendeschneidplatten bestücktes rundlaufendes Werkzeug zu schaffen, das es erlaubt, an den bearbeiteten Werkstück eine Schulter mit exakt definierten Wlnkelverhältnissen, insbesondere eine genaue 90° -Schulter zu erzeugen.

Zur Lösung dieser Aufgaben weisen erfindungsgemäß die Schneidplatte die Merkmale des Patentanspruchs 1 und das Werkzeug die Merkmale des Patentanspruchs 34 auf.

Der plattenförmige Grundkörper der neuen Schneidplatte ist vorzugsweise mit einer ebenen, rechteckigen oder quadratischen Grundfläche und einer von dieser beabstandeten ebenen oder strukturierten Oberseite sowie einer Anzahl von Seitenflächen ausgebildet, die an den vier Ecken des Grundkörpers aneinander angrenzen. Am Umfang, d.h. randseitig an dem Grundkörper, sind wenigstens eine Hauptschneidkante und eine Planschneidkante vorhanden, die sich jeweils über einen Teil des Umfanges des Grundkörpers erstrecken und die durch Span- und Freiflächen an der Oberseite bzw. an den Seitenflächen begrenzt sind.

An der Oberseite ist der Grundkörper an wenigstens einer Ecke nach außen zu abfallend abgeschrägt, derart, daß an der Ecke ein begrenzter, gegenüber der Grundfläche geneigter Bereich ausgebildet ist. In diesem geneigten Bereich setzt sich auf einer Seite der jeweiligen Ecke die zugeordnete Hauptschneidkante bis in den Bereich der Ecke fort. Der in den geneigten Bereich liegende Teil der Hauptschneidkante ist wesentlich kürzer (weniger als die Hälfte) als der außerhalb dieses Bereiches liegende Teil der gleichen Hauptschneidkante. Da der abgeschrägte Bereich praktisch nur auf den unmittelbaren Eckenbereich konzentriert ist, der bei der Zerspanung an stärksten belastet und dadurch am meisten bruchgefährdet ist, hat er nur einen vernachlässigbar geringen Einfluß auf die Zerspanungsleistung. Es ergeben sich deshalb bei der neuen Schneidplatte konstant gute Schnittbedingungen über praktisch die gesamte Länge der Hauptschneidkante. Auf der anderen Seite der Ecke ist in den geneigten Bereich die Planschneidkante ausgebildet, die sich in wesentlichen an die Hauptschneidkante anschließt.

Die neue Schneidplatte arbeitet beim Stirnfräsen mit einer Plan- oder Nebenschneide, so daß eine gute Oberfläche an dem bearbeiteten Werkstück gewährleistet ist. Sie erlaubt es, eine echte, genaue 90° -Schulter an den Werkstück zu erzeugen, wobei im Bereiche der Eckenradien Schneidkantenabschnitte mit kleineren Schneidkeil vermieden und damit eine hohe Festigkeit bei langer Lebensdauer gewährleistet sind. Die Abschrägung bewirkt nämlich eine Reduktion des Achswinkels im Eckenbereich, d.h. an der Stelle, wo eine erhöhte Bruchgefahr vorhanden ist. Gleichzeitig wird aber der normale für die Zerspanung besonders günstig gewählte Achswinkel in den außerhalb des geneigten Bereiches liegenden Abschnitt der Hauptschneidkante, welcher sich über den größten Teil der Schnittbreite erstreckt, beibehalten.

In dem mit diesen Schneidplatten bestückten neuen Werkzeug sind die Schneidplatten mit positivem Axial- und negativem Radialwinkel eingesetzt, derart, daß der in dem geneigten Bereich liegende Abschnitt der wirksamen Hauptschneidkante einen kleineren Axialwinkel aufweist als der Abschnitt, der außerhalb dieses Bereiches sich erstreckt. Die durch den geneigten Bereich ausgebildete Neben- oder Planschneidkante zu der im Eingriff befindlichen wirksamen Hauptschneidkante ist beim Stirnfräsen plan zu der gefrästen Werkstückoberfläche ausgerichtet, während die daran anschließende, nicht im Einsatz befindliche Hauptschneidkante sich von der Werkstückoberfläche unter einen Winkel weg erstreckt, so daß sie nicht mit der Werkstückoberfläche in Eingriff steht.

Das neue Werkzeug erlaubt es, an dem Werkstück eine echte 90°-Schulter zu erzeugen, wobei Abweichungen von dem rechten Winkel überhaupt vermieden oder auf ein für den jeweiligen Einsatzzweck ausreichendes Minimum reduziert werden können. Gleichzeitig können die Schneidplatten aber als echte Wendeschneidplatten mit vier nacheinander abarbeitbaren Schneidkanten ausgebildet sein, wodurch eine entsprechend hohe Wirtschaftlichkeit erzielbar ist.

In diesem Zusammenhang ist zu erwähnen, daß wenngleich bei den neuen Schneidplatten in der Regel alle vier Ecken mit der erläuterten Anschrägung versehen sind, so daß sich eine Wendeschneidplatte mit ringsum laufenden Schneidkanten ergibt, es doch auch Fälle geben kann, bei denen im Hinblick auf die Anforderungen des jeweiligen Einsatzzweckes an der Schneidplatte beispielsweise lediglich eine oder zwei Ecken abgeschrägt sind.

In der Oberseite der neuen Schneidplatte kann wenigstens eine der jeweiligen Schneidkante zugeordnete Spanmulde vorgesehen sein, doch umfaßt die Erfindung auch solche Ausführungsformen, bei denen die Plattenoberseite eben gestaltet ist.

Der in der jeweiligen Ecke der Schneidplatte vorgesehene geneigte Bereich erstreckt sich in der Regel beidseitig der Winkelhalbierenden der ihm zugeordneten Ecke. Er kann im wesentlichen symmetrisch zu dieser Winkelhalbierenden angeordnet ausgebildet sein, doch ist es häufig zweckmäßig, ihn bezogen auf die Winkelhalbierende "verschwenkt" und gegebenenfalls "gekippt" anzuordnen, um damit eine unterschiedliche Neigung und Länge der beiden den geneigten Bereich beidseitig der Ecke begrenzenden Schneidkanten, d.h. der Planschneidkante und des dieser benachbarten Abschnitts der Hauptschneidkante zu erzielen. Insbesondere, wenn der geneigte Bereich in einer Ebene liegt, ist er in der Draufsicht auf die Schneidplatte von Kanten begrenzt, die im wesentlichen entsprechend den Seiten eines Dreiecks angeordnet sind. Liegt der geneigte Bereich symmetrisch zu der Winkelhalbierenden der Ecke, so fällt die Höhe dieses Dreiecks mit der Winkelhalbierenden zusammen. Wie erwähnt, ist es aber häufig zweckmäßig, daß die Senkrechte auf die der Ecke gegenüberliegende Dreieckseite mit der Winkelhalbierenden der Ecke einen spitzen Winkel einschließt. Dieser Winkel kann zwischen 0° und ± 60° liegen; er beträgt vorzugsweise ca. ± 15 °.

Mit der Grundfläche schließt der geneigte Bereich zweckmäßigerweise einen Neigungswinkel zwischen 1,5° und 30°, vorzugsweise von 2° bis 8° ein. Auf der Oberseite der Schneidplatte kann, wie erwähnt, der geneigte Bereich durch eine ebene gegenüber der Grundfläche geneigte Fläche oder aber auch durch wenigstens zwei gleiche oder verschiedene Neigung zur Grundfläche aufweisende Schrägflächen begrenzt sein. Diese Teilflächen können zum Beispiel längs einer von der Ecke ausgehenden, gegenüber der Grundfläche geneigten Geraden aneinander angrenzend ausgebildet sein, wobei es auch denkbar ist, wenigstens eine der Teilflächen um diese Gerade gekippt anzuordnen. Eine gewisse praktische Bedeutung kann auch eine Ausbildungsform haben, bei der der geneigte Bereich auf der Oberseite zumindest teilweise von einer gekrümmten Fläche begrenzt, beispielsweise leicht ballig oder konkav ausgebildet ist.

Mit ihren außerhalb des geneigten Bereiches liegenden Teil kann die jeweilige Hauptschneidkante zumindest streckenweise in wesentlichen parallel oder geneigt zur Grundfläche verlaufend ausgebildet sein. Mit Rücksicht auf die Schnittverhältnisse kann es aber auch von Vorteil sein, die Hauptschneidkante als Polygonzug mit Abschnitten unterschiedlicher Neigung zur Grundfläche und/oder mit gegebenenfalls verschieden orientierten geraden und/oder gekrümmten Abschnitten auszubilden. Dies wird im nachfolgenden anhand von Ausführungsbeispielen noch erläutert.

Zweckmäßig ist es, wenn der Freiwinkel der Hauptschneidkante kleiner als der Freiwinkel der Planschneidkante ist. Außerdem kann die der Planschneidkante zugeordnete Freifläche einer Ecke mit der Freifläche der an sie anschließenden Hauptschneidkante der benachbarten Ecke einen Winkel von vorzugsweise 0,2° bis 2° einschließen, um den die Freifläche der Planschneidkante nach innen geschwenkt ist. Schließlich kann die Frelfläche des in den geneigten Bereich liegenden Teils der Hauptschneidkante einen der Hauptschneidkante benachbarten saumartigen Bereich aufweisen, der über einen zur Grundfläche hin sich erstreckenden zweiten Freiflächenbereich seitlich vorsteht und dessen Freiwinkel kleiner oder höchstens gleich ist als bzw. der Freiwinkel des zweiten Bereiches. Die Dicke des saumartigen Bereiches nimmt zweckmäßigerweise zu der Ecke hin zu. Der saumartige Bereich erlaubt es, den durch die Abschrägung im Eckenbereich entstehenden kleinen Formfehler an der Hauptschneidkante auszugleichen, wenn der in den geneigten Bereich liegende Abschnitt der Hauptschneidkante nicht genau parallel zu einer Erzeugenden des den Flugkreis des Werkzeuges enthaltenden gedachten Zylinders ausgerichtet ist.

Weitere Merkmale der neuen Schneidplatten sind Gegenstand von Unteransprüchen.

Die beschriebenen neuen Schneidplatten sind in das Fräs- oder Bohrwerkzeug mit positivem Axial- und negativen Radialwinkel derart eingesetzt, daß der in dem geneigten Bereich liegende Teil der wirksamen Hauptschneide in Einbaulage einen kleineren Axialwinkel als der übrige Teil der Hauptschneide aufweist, während die zugeordnete Planschneidkante in wesentlichen in einer rechtwinklig zu der Drehachse verlaufenden Planebene liegt. Diese Planschneidkante kann im übrigen auch leicht ballig ausgebildet sein, um eine gute Schlichtwirkung zu erzielen. Aus praktischen Erwägungen beträgt der Axialwinkel des in dem geneigten Bereich liegenden Teils der Hauptschneide in der Regel einige wenige Grad; grundsätzlich können die Schneidplatten in den Werkzeugkörper aber auch derart eingebaut werden, daß dieser im geneigten Bereich liegende Teil der Hauptschneide mit dem Axialwinkel 0° arbeitet. In diesem Falle ist von vorneherein gewährleistet, daß an den Werkstück eine genaue 90°-Schulter entsteht, wenn die der Ecke zugeordnete Planschneidkante in der Planfläche liegt.

In der Zeichnung sind Ausführungsbeispiele des Gegenstandes der Erfindung dargestellt. Es zeigen:
- Fig. 1: eine Wendeschneidplatte gemäß der Erfindung in einer ersten Ausführungsforn in perspektivischer Darstellung,
- Fig. 2: die Wendesschneidplatte nach Fig. 1, geschnitten längs der Linie II-II der Fig 1 in einer Seitenansicht und in einem anderen Maßstab,
- Fig. 3: die Wendeschneidplatte nach Fig. 1 geschnitten längs der Diagonallinie III-III in einer Seitenansicht und in einem anderen Maßstab,
- Fig. 4: einen Eckenbereich der Wendeschneidplatte nach Fig. 1 in der Draufsicht, im Ausschnitt und in einem anderen Maßstab,
- Fig. 5: die Wendeschneidplatte nach Fig. 2 in einen vergrößerten Maßstab im Ausschnitt und in einer entsprechenden Darstellung,
- Fig. 6: die Wendeschneidplatte nach Fig. 1 geschnitten längs der Linie VI-VI der Fig. 1 in einer Seitenansicht, im Ausschnitt und in einer Darstellung entsprechend Fig. 5,
- Fig. 7: eine Wendeschneidplatte gemäß der Erfindung in einer zweiten Ausführungsform in perspektivischer Darstellung,
- Fig. 8: die Wendeschneidplatte nach Fig. 7 in einer Seitenansicht und in einem anderen Maßstab,
- Fig. 9: die Wendeschneidplatte nach Fig. 7 geschnitten längs der Linie IX - IX der Fig. 7 in einer Seitenansicht,
- Fig. 10: eine Einzelheit der Wendeschneidplatte nach Fig. 9 in Ausschnitt und in einem vergrößerten Maßstab sowie in einer entsprechenden Darstellung,
- Fig. 11: eine Draufsicht auf einen Eckbereich der Wendeschneidplatte nach Fig. 7 im Ausschnitt, in vergrößerter Darstellung und in der Zuordnung zu einem in Schnittbild dargestellten bearbeiteten Werkstück,
- Fig. 12: einen Eckfräser gemäß der Erfindung bestückt mit Wendeschneidplatten gemäß den Fig. 7 bis 10 in der Draufsicht auf die Stirnseite,
- Fig. 13: den Eckfräser nach Fig. 12 in einer Seitenansicht und in schematischer Darstellung,
- Fig. 14 und 15: die Wendeschneidplatte nach Fig. 7 in ihrer Einbaulage in dem Eckfräser nach den Fig. 12 bis 13 in zwei verschiedenen perspektivischen Stellungen entsprechend der Darstellung nach Fig. 13,
- Fig. 16: eine Wendeschneidplatte gemäß der Erfindung in einer dritten Ausführungsform in perspektivischer Darstellung,
- Fig. 17: eine Wendeschneidplatte gemäß der Erfindung in einer vierten Ausführungsform und in perspektivischer Darstellung,
- Fig. 18: die Wendeschneidplatte nach Fig. 17 in einer Seitenansicht und
- Fig. 19: die Wendeschneidplatte nach Fig. 17 in der Draufsicht auf die Spanflächen.

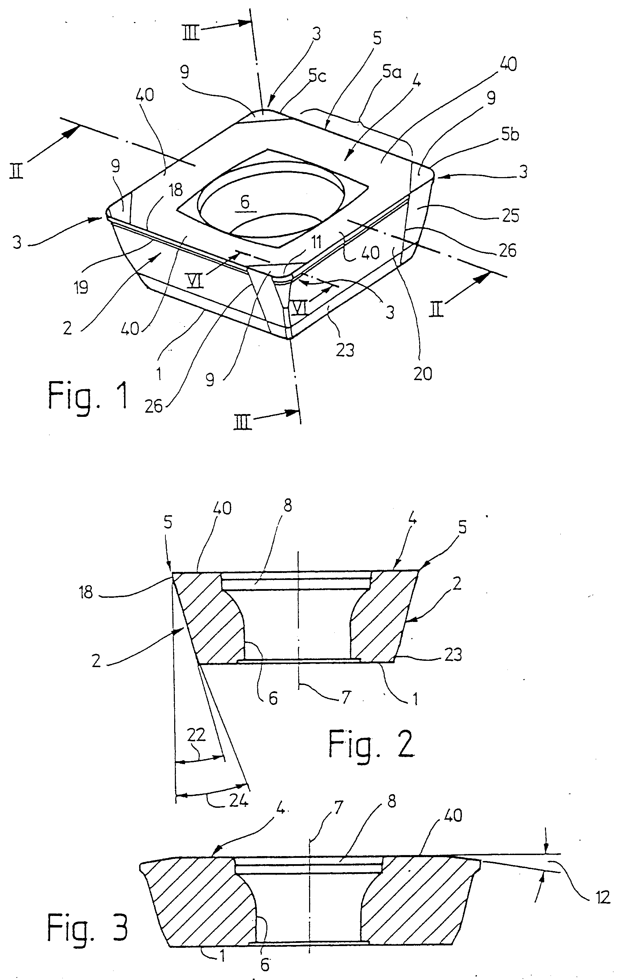

Die in den Fig. 1 bis 6 in einer ersten einfachen Ausführungsform dargestellte Schneidplatte ist in Form einer Wendeschneidplatte ausgebildet. Sie besteht, wie auch die nachfolgend noch geschilderten Ausführungsfornen aus Hartmetall, Schneidkeranik oder einem anderen entsprechenden Schneidstoff. Sie ist als sogenannte Positiv-Schneidplatte mit einem Grundkörper ausgebildet, der grundsätzlich die Gestalt eines Pyramidenstunpfes aufweist, dessen kleinere Fläche die ebene Grundfläche 1 der Wendeschneidplatte bildet. Die Grundfläche 1 ist quadratisch; sie ist umschlossen von vier jeweils um den gleichen Winkel nach auswärts geneigten Seitenflächen 2, die unter Ausbildung von vier Ecken 3 aneinander angrenzen. Die, wie aus Fig. 1 ersichtlich, von der Grundflache 1 beabstandete Oberseite 4 der Wendeschneidplatte ist als ebene, zu der Grundfläche 1 parallele Fläche 4 ausgebildet, deren Schnittlinien mit den Seitenflächen 2 randseitig angeordnete ringsum den Umfang umlaufende Schneidkanten 5 bilden.

Die Wendeschneidplatte ist als sogenannte Lochplatte mit einem durchgehenden zylindrischen Loch 6 gestaltet, dessen durch die Grundfläche 1 rechtwinklig verlaufende Achse 7 (Fig. 2) durch den Diagonalenschnittpunkt der Grundfläche geht. Im Bereiche der Oberseite 4 ist das Loch 6 bei 8 nach außen zu radial sich erweiternd entsprechend der Gestalt des Kopfes der Spannschraube gestaltet, wie dies ansich bekannt ist.

Die Schneidkanten 5 sind durch Spanflächen auf der Oberseite 4 und durch Freiflächen an den Seitenflächen 2 begrenzt, deren Gestalt und Anordnung im Einzelnen noch erläutert werden wird.

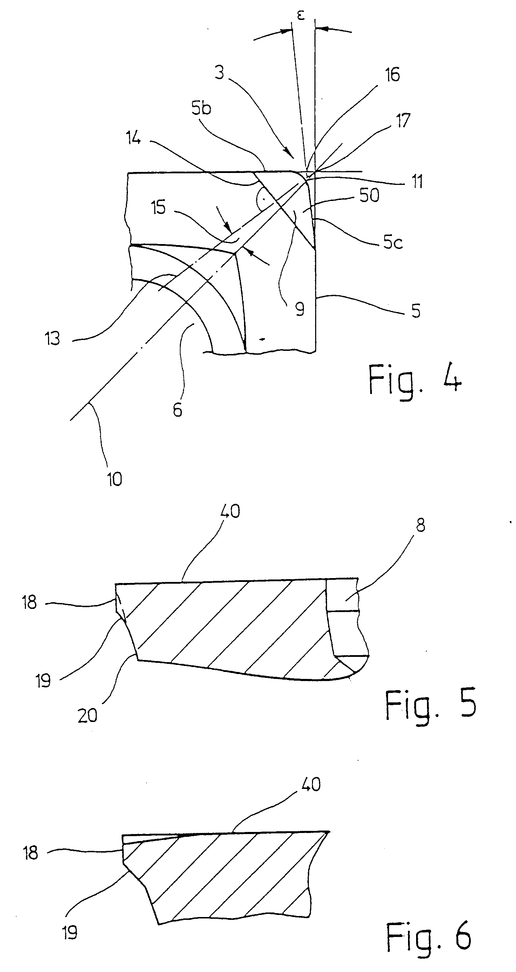

Im Bereiche der vier Ecken 3 ist der Grundkörper der Wendeschneidplatte auf der Oberseite 4 nach außen zu abfallend abgeschrägt, derart, daß an jeder der Ecken 3 ein begrenzter, gegenüber der Grundfläche 1 geneigter Bereich 9 ausgebildet ist, der eine im wesentlichen dreieckförmige Gestalt aufweist. Der geneigte Bereich 9 ist bei dieser Ausführungsform zur Oberseite 4 hin durch eine bezüglich der Grundfläche 1 schräge ebene Fläche begrenzt und erstreckt sich beidseitig der in Fig. 4 bei 10 angedeuteten Winkelhalbierenden der jeweiligen Ecke 3. Er schneidet die auf den an den an der jeweiligen Ecke aneinander angrenzenden Seitenflächen 2 vorgesehenen Freiflächen unter Ausbildung von zwei gegenüber der Grundfläche geneigten Schneidkanten 5b, 5c, von denen die Schneidkante 5b auf der einen Seite der Ecke 3 gemeinsam mit dem sich an sie anschließenden längeren Teil 5a der dieser Grundkörperseite zugeordneten Schneidkante 5 die jeweilige Hauptschneidkante bildet, während die auf der anderen Seite der Ecke 3 sich erstreckende, mit der Schneidkante 5b in der Draufsicht einen stumpfen Winkel einschließende Schneidkante 5c als der Hauptschneidkante 5a, 5b zugeordnete Neben- oder Planschneidkante dient. Die Länge des in dem geneigten Bereich 9 liegenden Teiles 5b der Hauptschneidkante ist im wesentlichen gleich der Länge der zugeordneten Neben- oder Planschneidkante 5c. Dieses Hauptschneidkantenteil 5b erstreckt sich über eine Länge, die bei 15 bis 30%, vorzugsweise bei ca. 20% der Gesamtlänge der Hauptschneidkante 5a, 5b liegt.

An jeder der Ecken 3 erstreckt sich somit die Hauptschneidkante 5a, 5b mit ihrem Abschnitt 5b in den geneigten Bereich 9, der an der Ecke selbst in der aus Fig. 4 zu entnehmenden Weise bei 11 mit einen Eckradius abgerundet ist, dessen entsprechende Unfangskante die beiden Schneidkanten 5b, 5c übergangslos miteinander verbindet.

Die Neben- oder Planschneidkante 5c ist in der Regel gerade, sie kann aber auch über einen in Fig. 4 bei 50 angedeuteten Bereich nach außen zu leicht ballig gekrümnt sein, um an dem Werkstück eine gute Oberflächenbeschaffenheit der Schnittfläche auch bei leichten Toleranzschwankungen des ε zu erzielen.

Der geneigte Bereich 9 schließt mit der Grundfläche 1 bzw. einer zu dieser parallelen Fläche einen Neigungswinkel zwischen 1,5° und 30° ein. Vorzugsweise liegt der Neigungswinkel in den Bereich von 2° bis 8°. Dieser Neigungswinkel ist in Fig. 3 mit 12 bezeichnet.

Grundsätzlich kann der geneigte Bereich symmetrisch zu der Winkelhalbierenden 10 der zugehörigen Ecke 3 liegen, doch ist es häufig zweckmäßig, den geneigten Bereich 9 gegenüber der Winkelhalbierenden 10 seitlich etwas zu verschwenken, um eine unterschiedliche Länge der beiden von ihm begrenzten Schneidkanten 5b, 5c zu erzielen. Fig. 4 zeigt, daß die Senkrechte 13 auf die der Ecke 3 gegenüberliegende Dreieckseite 14 mit der Winkelhalbierenden 10 einen spitzen Winkel 15 einschließt, der bei dem dargestellten Ausführungsbeispiel etwa + 8° beträgt und der grundsätzlich in den Bereich zwischen 0° und ±60° liegen kann sowie mit Vorzug ca. ± 15° beträgt.

Um die Länge und die Neigung gegenüber der Grundfläche 1 der beiden von dem geneigten Bereich 9 begrenzten Schneidkanten 5b, 5c den Anforderungen des jeweiligen Einsatzfalles entsprechend zu gestalten, kann im übrigen die den geneigten Bereich 9 oben begrenzende Fläche auch um die Winkelhalbierende 10 der Ecke gekippt werden. Die Seiten des den geneigten Bereich 9 umgrenzenden Dreiecks schneiden sich der Seite 14 (Fig. 4) gegenüberliegend in einem Punkt 16, der auf der (theoretischen) Schnittlinie der die Ecke 3 bildenden beiden Seltenflächen 2 liegen kann. Die Verhältnisse können aber auch so gewählt sein, daß, wie Fig. 4 zeigt, der Schneidkantenschnittpunkt 16 nicht auf dieser Schnittlinie liegt.

Im übrigen ist es denkbar, daß der geneigte Bereich 9 im Bereiche der Oberseite 4 durch eine gekrümmte, beispielsweise ballige oder konkave Oberfläche begrenzt ist, wie es auch vorstellbar ist, daß sich seine Oberfläche aus mehreren Teilflächenbereichen zusammensetzt, die beispielsweise längs der Winkelhalbierenden 10 aneinander stoßen und die auch gegeneinander gekippt und verschwenkt sein können.

Auf diese Weise lassen sich besondere Formen des innerhalb des geneigten Bereiches liegenden Hauptschneidkantenteiles 5b und/oder der zugehörigen Neben- oder Planschneidkante 5c erzielen. Während bei dem dargestellten Ausführungsbeispiel der außerhalb des geneigten Bereiches 9 liegende Teil 5a der Hauptschneidkante gerade und parallel zur Grundfläche 1 ausgerichtet ist, bezieht sich die Erfindung auch auf solche Wendeschneidplatten, bei denen der Grundkörper durch leicht gekrümmte Seitenflächen 2 begrenzt ist, derart, daß sich beispielsweise in der Höhe eine ballige Ausbildung der Hauptschneidkantenabschnitte 5a und/oder 5b ergibt. Außerkann dann auch der Hauptschneidkantenabschnitt 5a gegenüber der Grundfläche 1 in der Seitenansicht geneigt oder überhaupt gekrümmt ausgebildet sein, wie dies im einzelnen auch erlautert werden wird.

Die Schneidkanten 5 - d.h. 5a und 5b - und 5c sind, wie bereits erwähnt, durch Span- und Freiflächen begrenzt. Da die Wendeschneidplatte bei der Ausführungsform nach den Fig. 1 bis 6 keine Spanmulden aufweist, sind die Spanflächen durch die die Oberseite 4 bildende ebene Fläche unmittelbar gebildet. Die jedem Hauptschneidenabschnitt 5a zugeordnete Spanfläche ist in den Fig. 1 bis 6 mit 40 bezeichnet. Fur den Hauptschneidenabschnitt 5b liegt die Spanfläche in dem jeweiligen geneigten Bereich 9 ebenso wie für die zugehörige Neben- oder Planschneidkante 5c.

Die in der der jeweiligen Schneidkante zugeordneten Seitenfläche 2 liegende Freifläche ist in mehrere Abschnitte unterteilt:

Wie insbesondere aus den Fig. 2 bis 6 zu entnehmen, erstreckt sich über die Länge jedes der Hauptschneidenabschnitte 5a und des zugehörigen Hauptschneidenabschnittes 5b ein erster saumartiger Freiflächenbereich 18, dessen Höhe in Richtung der Lochachse 7 typischerweise einige Zehntel Millimiter (ca. 0,2 bis 0,8 mm) beträgt und der, wie aus Fig. 2 zu entnehmen, den Freiwinkel 0° aufweist, d.h. rechtwinklig zur Grundfläche 1 verläuft. Eine Abweichung zu leicht positivem oder leicht negativen Freiwinkel ist denkbar. Die Breite des saumartigen Freiflächenbereiches, rechtwinklig zu den Hauptschneidkantenabschnitten 5a, 5b gemessen, ist konstant.

An diesen saumartigen ersten Freiflächenbereich 18 schließt sich über einen nach innen einspringenden band- oder leistenförmigen zweiten Übergangsbereich 19 ein dritter Freiflächenbereich 20 (Fig. 5, 6) an, dessen Freiwinkel grundsätzlich die bei solchen Wendeschneidplatten übliche Größe aufweist, typischerweise etwa 15°. Der Freiwinkel dieses Bereiches ist in Fig. 2 bei 22 angedeutet.

An diesen Bereich schließt sich zur Grundfläche 1 hin ein vierter schmaler Freiflächenbereich 23 an, dessen Freiwinkel 24 (Fig. 2) etwas größer ist, als der Freiwinkel 22 des benachbarten Bereiches 20; er liegt typischerweise bei ca. 20°.

Wie aus Fig. 4 zu ersehen, ist im Bereiche jeder der Ecken 3 der unmittelbar an die Ecklinie 17 anschließende, die Plan- oder Nebenschneidkante 5c enthaltende Freiflächenbereich 25 (vergleiche Fig. 1) bezüglich des anschließenden Freiflächenbereiches 20 der zugehörigen Seitenfläche 2 um einen kleinen Winkel ε, der vorzugsweise in der Größenordnung von 0,2° bis 2° liegt, nach innen geschwenkt. Der Winkelbereich liegt maximal zwischen den Grenzen von 0,1° bis 6°. Die dadurch entstehende von dem Endpunkt der Neben- oder Planschneidkante 5c ausgehende Kante in der zugeordneten Seitenfläche 2 ist bei 26 in Fig. 1 eingezeichnet. An ihr oder in ihrer Nähe endet auch der erste Freiflächenbereich 18, so daß sich im Bereiche der Neben- oder Planschneide 5c an jeder der Ecken 3 die zugehörige Planfläche 25 ausgehend von den Abschnitt 23 in der Nähe der Grundfläche 1 bis zu der Neben- oder Planschneidkante 5c erstreckt. Der Freiwinkel ist hier so groß, wie in dem anschließenden Freiflächenbereich 20, d.h. er entspricht dem Freiwinkel 22 der Fig. 2 und ist typischerweise ca. 15°.

Zufolge der Schräglage des geneigten Bereiches 9 weicht in jeder der Ecken 3 der (gedachte) Schnittpunkt 16 der beiden, den geneigten Bereich 9 begrenzenden Kanten 5b, 5c gegenüber der theoretischen Schnittkante 17 der zugehörigen Seitenflächen 2 (Fig. 4) zur Lochachse 7 hin zurück. Um einen dadurch entstehenden geringfügigen Formfehler an der in Werkstück zu erzeugenden Schulter auszugleichen, wenn die Wendeschneidplatte mit einem von 0° abweichenden Axialwinkel für den Hauptschneidenabschnitt 5b arbeitet, kann der saumartige erste Freiflächenbereich 18 in dem geneigten Bereich 9 in dem er den schrägliegenden Hauptschneidkantenabschnitt 5b folgt, nach außen zu etwas stärker vortretend ausgebildet sein, wie dies aus einen Vergleich der Fig. 5, 6 zu entnehmen ist. Mit anderen Worten, der in dem Bereich 18 gebildete, nach außen zu balkonartig über den Bereich 20 vorstehende Bereich wächst zu der Ecke 3 hin in seiner Breite gemessen parallel zur Grundfläche 1 etwas an. Er erstreckt sich im übrigen, wie aus Fig. 1 zu ersehen, ringsum den Eckradius der Ecke und endet an Anschluß an die zugeordnete Neben- oder Planschneidkante 5c.

Die Zunahme des ersten Freiflächenbereiches 18 von den Beginn des geneigten Bereiches 9 (an der Dreieckseite 14, Fig. 4) bis zu dem Beginn des Eckradius 11 liegt in der Regel in der Größenordnung von einigen Hundertstel Millimeter, typischerweise bei ca. 3/100 mm.

Zufolge des saumartigen Bereiches 18 (mit dem Freiwinkel 0°) ist der Freiwinkel in den Abschnitten 5a, 5b der Hauptschneidkante jeweils kleiner als in den Freiflächenabschnitt 25 der zugeordneten Neben- oder Planschneidkante 5c. Es sind aber auch Ausführungsformen denkbar, bei denen der Freiwinkel in dem Bereich der Hauptschneidkante 5a, 5b gleich oder größer ist als in dem Bereich der Nebenschneidkante 5c oder bei denen die Hauptschneidkantenabschnitte 5a, 5b ihrerseits unterschiedliche Freiwinkel aufweisen.

Im übrigen ist, wie bereits bemerkt, die Neben- oder Planschneidkante 5c zufolge der besonderen Gestaltung des geneigten Bereiches 9 länger als der Hauptschneidkantenabschnitt 5b an der jeweiligen Ecke 3.

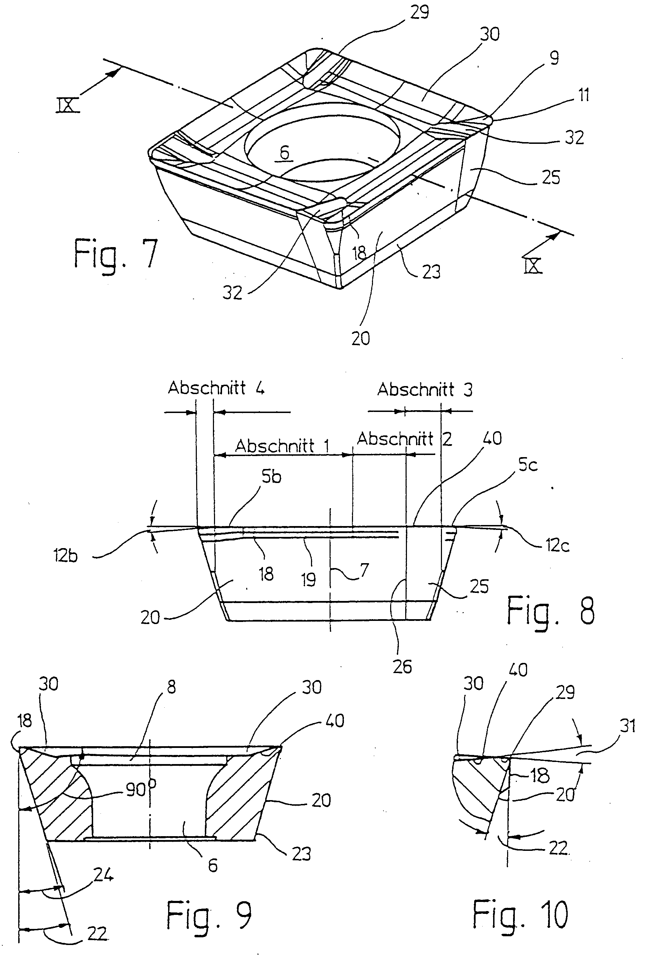

Während bei der beschriebenen Ausführungsform nach den Fig. 1 bis 6 die Oberseite 4 des Grundkörpers durch eine zu der Grundfläche 1 parallele ebene Fläche gebildet ist, die die Spanflächen 40 enthält, ist in den Fig. 7 bis 11 eine Ausführungsform veranschaulicht, bei der in die Oberseite 4 Spanmulden eingeformt sind, so daß sich eine strukturierte Fläche auf der Oberseite ergibt. Auch bei dieser Ausführungsform handelt es sich um eine Positiv-Wendeschneidplatte mit quadratischer Grundfläche 1 und vier gleichen, nacheinander abarbeitbaren Schneidkanten 5. Der Grundkörper ist demgemäß ebenfalls pyramidenstumpfförmig; alle vier Ecken 3 liegen im gleichen Abstand oberhalb der Grundfläche 1.

Bei der Beschreibung dieser Ausführungsform sind deshalb gleiche Teile, wie bei der Ausführungsform nach den Fig. 1 bis 6 mit gleichem Bezugszeichen versehen und da die grundsätzliche Formgestalt dieser Wendeschneidplatte gleich geblieben ist, nicht nochmals erläutert.

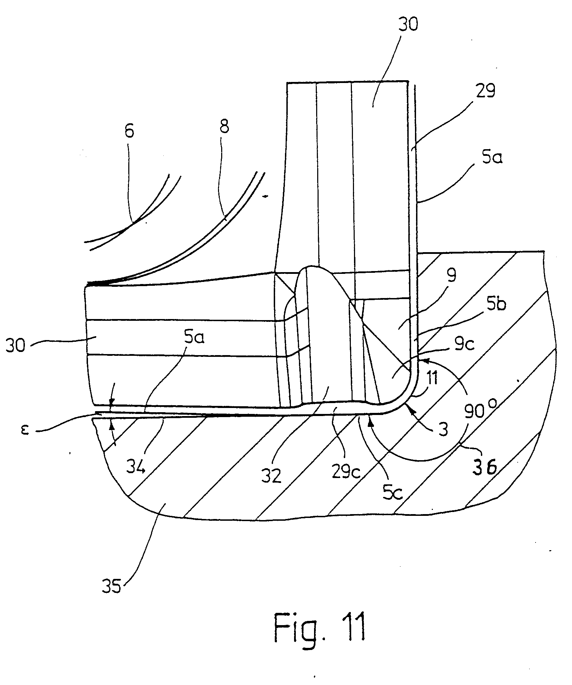

In jeder der vier Ecken 3 ist wiederum ein geneigter Bereich 9 vorhanden, dessen Neigung so gewählt ist, daß, wie aus Fig. 8 zu ersehen, der der jeweiligen Ecke 3 zugeordnete Hauptschneidenabschnitt 5b gegenüber der Grundfläche 1 bzw. einer zu dieser parallelen Ebene nach außen zu um einen Winkel von ca. 3° geneigt ist, während die Neigung der zugehörigen Neben- oder Planschneidkante 5c ca. 2,6° beträgt, wie dies durch die Winkel 12b, 12c in Fig. 8 angedeutet ist. Der Grundkörper der Wendeschneidplatte ist anschließend an die Schneidkanten 5a, 5b und 5c mit einer ringsum laufenden ununterbrochenen schmalen ebenen Fase 29 ausgebildet, die parallel zu der Grundfläche 1 ausgerichtet ist und einen ersten Spanflächenabschnitt bildet. Die Breite dieser Fase liegt in Bereich von wenigen Zehntel Millimeter und beträgt typischerweise ca. 15/100 Millimeter. An sie schließt sich innen auf jeder Seite im Bereiche des Hauptschneidkantenabschnittes 5a eine Spanmulde 30 an, die angrenzend an die Fase 29 einen Spanflächenbereich mit einem Spanwinkel von 5° bis 40°, vorzugsweise ca. 20° bildet. Der zugehörige Spanwinkel ist in Fig. 10 mit 31 bezeichnet. Im Bereiche jeder der Ecken ist der Neben- oder Planschneide 5c eine eigene Spanmulde 32 zugeordnet, die mit ihrer Achse etwa rechtwinklig zu der Neben- oder Planschneidkante 5c ausgerichtet ist und deren spezielle Anordnung und Gestaltung insbesondere auch aus Fig. 11 zu entnehmen ist. Zur besseren optischen Veranschaulichung sind dazu in den Fig. 7, 11 Höhenlinien und die zugeordnete Orthogonallinien eingetragen. Wie Fig. 11 erkennen läßt, ist die Fase 29 im Bereiche dieser Spanmulde 32 bei 29c in ihrer Wandstärke etwas verstärkt. Anschließend an die in Querschnitt etwa U-förmige Spanmulde 32 der Neben- oder Planschneide 5c ergibt sich in jeder Ecke 3 ein durch den Eckenradius 11 der Fase 29 innen begrenzter, etwa dreieckförmiger Spanflächenbereich 9c, der zum Boden der Spanmulde 32 hin geneigt ist und den Übergang zu der der Hauptschneidkante 5a, 5b zugeordneten Spanmulde 30 herstellt. Im Bereiche der Neben- oder Planschneidkante 5c ist die Freifläche 25 wiederum um den kleinen Winkel ε (Fig. 11) nach innen geschwenkt, so daß, wie aus Fig. 11 zu entnehmen, bei im Einsatz befindlicher Wendeschneidplatte die sich an die Neben- oder Planschneidkante 5c einer Ecke 3 mit ihrem Abschnitt 5a anschließende Hauptschneidkante der anderen Ecke von der planen Schnittfläche 34 des Werkstückes 35 zunehmend abhebt und damit mit dieser außer Eingriff gehalten ist, während gleichzeitig von den in Eingriff befindlichen Hauptschneidkantenabschnitten 5a, 5b eine exakte 90°-Schulter bei 36 in den Werkstück 35 erzeugt wird, wie dies in Fig. 11 angedeutet ist.

Die Freiflächen für die Schneidkanten 5a, 5b, 5c sind grundsätzlich ähnlich wie bei der Ausführungsform nach den Fig. 1 bis 6 gestaltet. Dies ist in Fig. 8 nochmals dargestellt:

In dem beginnend an dem Eckradius 11 und sich auf der betrachteten Seite des Grundkörpers bis etwas über die Lochachse 7 hinaus erstreckenden Abschnitt 1 beträgt der Freiwinkel des sich an die Hauptschneidkante 5a, 5b anschließenden Freiflächenabschnittes 18 etwa 0°.

In dem daran anschließenden Abschnitt 2 bis zu der den Freiflächenbereich 25 der Nebenschneidkante 5c begrenzenden Kante 26 ist die Freifläche so gestaltet, daß sich ein Freiwinkelübergang von 0° auf den Freiwinkel 22 (typischerweise etwa 15° ) ergibt.

In dem der Nebenschneidkante 5c zugeordneten Freiflächenbereich 25 ist der Freiwinkel 22 konstant bis zum Beginn des Eckradius 11 (Abschnitt 3 in Fig. 8).

In dem daran anschließenden Abschnitt 4 erfolgt dann am Eckradius 11 der Freiwinkelübergang von dem Wert des Freiwinkels 22 auf 0° für den sich nun anschließenden saumartigen Freiflächenbereich 18 des Hauptschneidkantenabschnittes 5b der anderen Hauptschneidkante 5a, 5b, die in Fig. 8 senkrecht zur Zeichenebene verläuft.

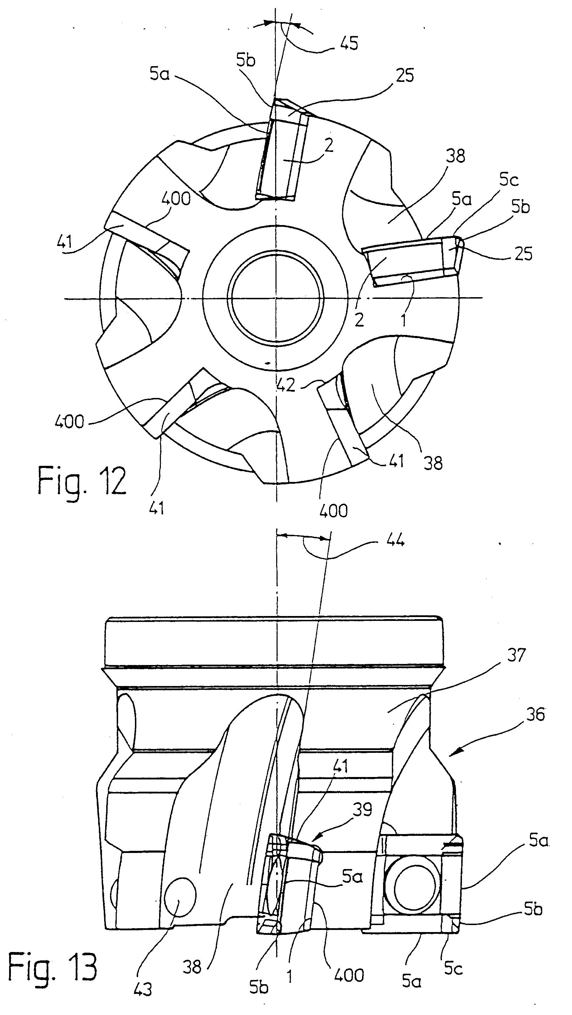

Die beschriebenen Wendeschneidplatten sind dazu bestimmt, in den Werkzeugkörper eines rundlaufenden, spanabhebenden Werkzeuges, d.h. eines Bohr- oder Fräswerkzeuges grundsätzlich in der Weise eingesetzt zu werden, wie dies anhand der Fig. 12 bis 15 mit einem mit der Wendeschneidplatten der Ausführungsform nach den Fig. 7 bis 11 bestückten Eckfräser veranschaulicht ist.

Der Eckfräser 36 weist einen im wesentlichen zylindrischen Werkzeugkörper 37 auf, an dessen Umfang gleichmäßig verteilt angeordnete Ausnehmungen 38 ausgebildet sind, die Spannuten bilden und von denen jeder ein Wendeschneidplattensitz 39 zugeordnet ist, der eine ebene Sitzfläche 400 und zwei seitliche Anschlagflächen 41, 42 aufweist. Die jeweils eingesetzte Wendeschneidplatte sitzt mit ihrer Grundfläche 1 auf der Sitzfläche 400 auf und liegt mit ihren Seitenflächen in Bereiche der zweiten Spanflächenabschnitte 20 an den Anschlagflächen 41, 42 an. Sie ist in ansich bekannter Weise mittels einer in den Fig. 12, 13 nicht weiter dargestellten Spannschraube an dem Werkzeugkörper 37 befestigt, deren zugeordnete Gewindebohrung bei 43 in Fig. 13 veranschaulicht ist.

Die Sitzflächen 400 sind derart orientiert, daß jede Wendeschneidplatte mit einem positiven Axialwinkel 44 von typischerweise ca. 6° bis 12° für ihren wirksamen Hauptschneidkantenabschnitt 5a (Fig. 13) und mit einem negativen Radialwinkel 45 (Fig. 12) arbeitet, der bei den dargestellten Ausführungsbeispiel ca. 11,5° beträgt.

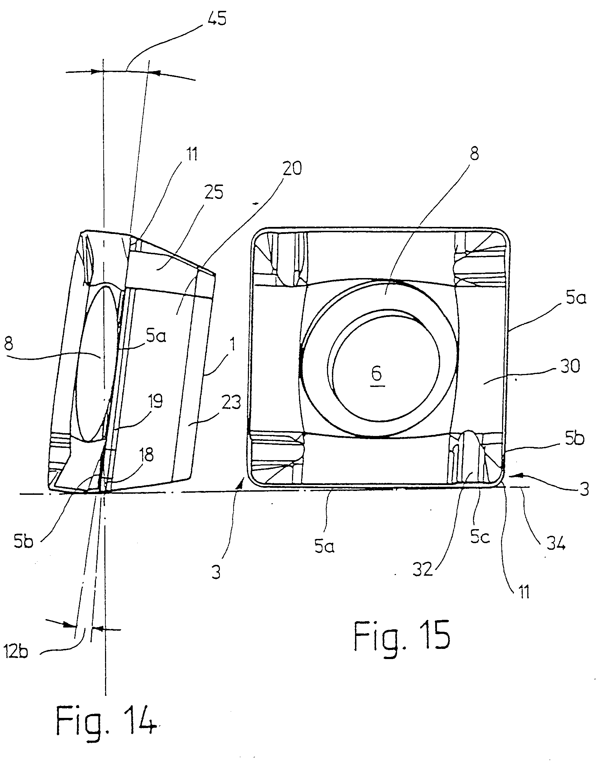

Die der wirksamen, d.h. am Umfang des Werkzeugkörpers 37 schneidenden Hauptschneide 5a, 5b zugeordnete Neben- oder Planschneidkante 5c liegt, wie aus Fig. 15 zu entnehmen, in der Planebene 34, während, wie bereits früher erläutert, der sich daran anschließende Abschnitt 5a der der Planfläche 34 zugeordneten unwirksanen Hauptschneidkante sich zur Drehachse hin von der Planflache abhebt. Da die Wendeschneidplatte im Bereich der Schneidecken jeweils den abgeschrägten Bereich 9 aufweist, arbeitet der in diesen Bereich liegende Hauptschneidkantenabschnitt 5b mit einem Axialwinkel, der um den entsprechenden Neigungswinkel dieses Hauptschneidkantenabschnittes 5b kleiner ist als der Axialwinkel 44. Bei den gewählten Abmessungen des Ausführungsbeispiels beträgt dieser Axialwinkel ca. 4 bis 5° [ca. 8° (Axialwinkel 44 des Hauptschneidkantenabschnittes 5a) - ca. 3° (Neigungswinkel 12b des Hauptschneidenkantenabschnittes 5b) = ca. 5°]. Die sich durch diesen kleinen Axialwinkel noch gebende geringe Formabweichung von 90° im Bereiche der in dem Werkstück erzeugten Schulter ist durch eine entsprechende Vergrößerung der Dicke des saumartigen ersten Freiflächenabschnittes 18 an der wirksamen Schneidecke (ca. 3/100 mm) ausgeglichen, wie dies im einzelnen bereits erläutert wurde.

Grundsätzlich ist es auch möglich, die Wendeschneidplatten unter einen solchen positiven Axialwinkel und negativem Radialwinkel in den Werkzeugkörper 37 einzusetzen, daß bei entsprechend gewähltem Neigungswinkel des abgeschrägten Bereiches 9 gegenüber der Wendeplattengrundfläche sich eine zu der Drehachse der Werkzeugkörpers parallele Ausrichtung des wirksamen Hauptschneidenabschnittes 5b ergibt oder mit anderen Worten, daß dieser Hauptschneidkantenabschnitt 5b auf einer Erzeugenden des den Flugkreis der Schneidkanten am Umfang des Werkzeugkörpers enthaltenden, gedachten Zylinders liegt. Wenn dann die zugeordnete wirksame Nebenschneidkante 5c, wie bereits erwähnt, in der Planfläche 34 liegt, ergibt sich eine theoretisch exakte 90°-Schulter in dem Werkstück, ohne daß es dazu einer Korrektur durch eine Veränderung des ersten saumartigen Freiflächenabschnittes 18 bedürfte.

Durch den geneigten Bereich 9 werden die Wendeschneidplatten in Bereiche der besonders bruchgefährdeten Schneidecken 3 stabilisiert, so daß sie bei guten Schnittverhältnissen auch eine lange Lebensdauer ergibt.

Abschließend sei noch erwähnt, daß in Fig. 12 lediglich zwei Wendeschneidplatten eingezeichnet sind; tatsächlich ist der Werkzeugkörper 37 naturgemäß in allen seinen Ausnehmungen 38 ringsum seinen Umfang gleichmäßig mit Wendeschneidplatten bestückt.

Jede der quadratischen Wendeschneidplatten hat vier gleichgestaltete Hauptschneidkanten 5a, 5b, von denen jeder eine Neben- oder Planschneidkante 5c zugeordnet ist und die nacheinander abgearbeitet werden können.

Die Hauptschneidkantenabschnitte 5a der bisher erläuterten Wendeschneidplatten sind in der Seitenansicht parallel zu der Grundfläche 1 ausgerichtet; sie sind Gerade.

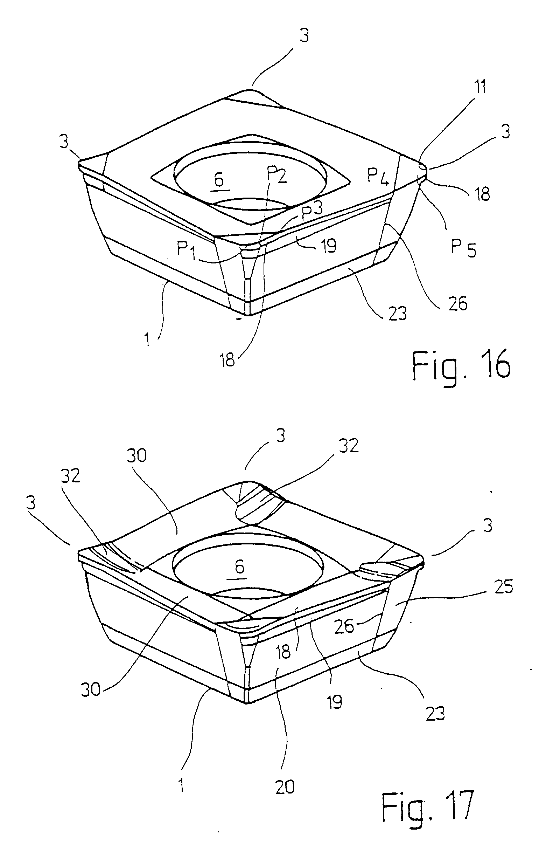

Wie aber bereits eingangs kurz erwähnt, können die Hauptschneidkanten auch anders gestaltet, beispielsweise gekrümmt oder jeweils als Polygonzug ausgebildet sein. Ein Ausführungsbelspiel mit nach Art von Polygonzügen gestalteten Hauptschneidkanten sei anhand der Fig. 16 bis 19 in zwei Ausführungsformen, ohne Spanmulden (Fig. 16) und mit Spanmulden (Fig. 17 bis 19) kurz erläutert.

Der grundsätzliche Aufbau der Wendeschneidplatten nach den Fig. 16 bis 19 ist gleich jenem der Wendeschneidplatten nach den Fig. 1 bis 6 bzw. 7 bis 15 Gleiche Teile sind deshalb insoweit mit gleichen Bezugszeichen versehen und nicht nochmals erläutert.

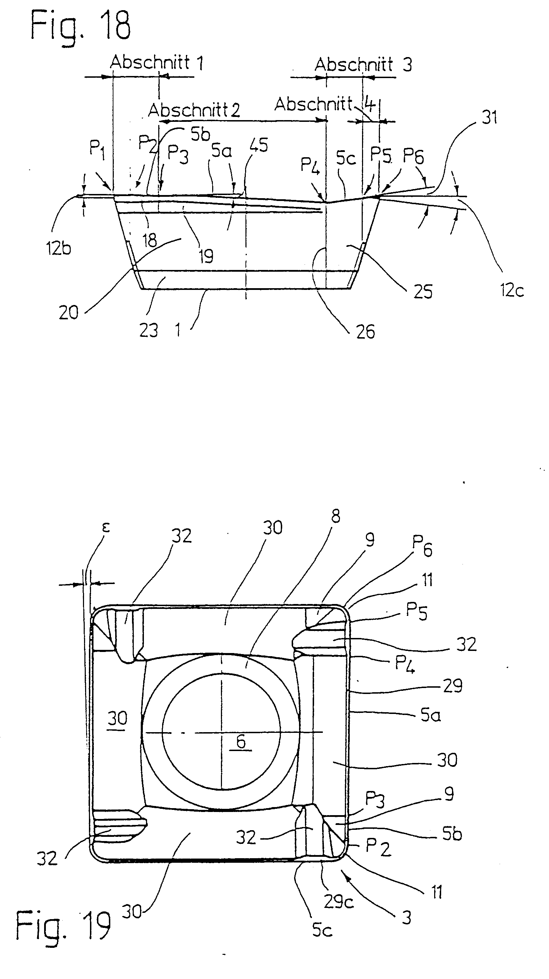

Auch bei den Wendeschneidplatten nach den Fig. 16 bis 19 liegen alle vier Ecken 3 des Grundkörpers in gleichen Höhenabstand von der quadratischen Grundfläche 1, d.h. in einer gemeinsamen gedachten Ebene, die parallel zu der Grundfläche 1 ausgerichtet ist. An jeder der Ecken 3 ist wiederum ein geneigter Bereich 9 ausgebildet. Die sich daraus ergebenden Neigungwinkel der Hauptschneidkantenabschnitte 5b und der Neben- oder Planschneiden 5c gegenüber der Grundfläche 1 sind gleich bemessen wie in Fig. 8 und in Fig. 18 mit 12b und 12c bezeichnet.

Der Verlauf einer über eine Seite durchgehenden Schneidkante 5 des pyramidenstumpfförmigen Grundkörpers der Wendeschneidplatte ist aus Fig. 18, 19 zu ersehen:

Ausgehend von dem Punkt P2 am Ende des dem Eckradius 11 entsprechenden Schneidkantenbereichs in der zugeordneten Ecke 3 steigt die Hauptschneidkante über den Abschnitt 5b in dem geneigten Bereich 9 bis zu dessen Ende an dem Punkt P3 gegenüber der Grundfläche 1 an. Über den daran anschließenden Abschnitt (5a), d.h. von dem Punkt P3 bis zu einem Punkt P4 auf der den Freiflächenbereich 25 der nächsten (in Fig. 18 rechten) Ecke 3 begrenzenden Kante 26 fällt die Hauptschneidkante gegenüber der Grundfläche 1 wiederum ab und zwar um einen Winkel, der in den Bereich von ca. 1,5 bis 8° liegt und im vorliegenden Falle ca. 3° beträgt. Die beiden Hauptschneidkantenbereiche 5a, 5c sind Gerade, die einen kleinen Winkel (ε) miteinander einschließen (Fig. 11). Von dem Punkt P4 steigt die nun die Neben- oder Planschneidkante 5c der in Fig. 18 rechten Ecke bildende Schneidkante wieder an bis zu einem Punkt P5, der auf der Fläche des geneigten Bereiches 9 am Beginn der Eckrundung mit den Eckradius 11 liegt. Von diesem Punkt P5 aus fällt die Schneidkante sodann wiederum zu dem Eckpunkt P6 dieser Ecke 3 ab, der auf der gleichen Höhe liegt, wie der Punkt P1 am anderen (in Fig. 18 linken) Ende des Polygonzuges, der den Eckpunkt dieser (linken) Ecke 3 bildet.

Zwischen den Punkten P2 und P4 bilden die beiden Abschnitte 5a und 5b wieder die Hauptschneidkante; die Strecke zwischen den Punkten P4 und P5 ist die Nebenschneidkante 5c für die nächste Ecke 3, die nach den Verbrauchen der Hauptschneidkante zwischen den Punkten P2 und P4 nachfolgend durch entsprechendes Wenden der Wendeschneidplatte in Einsatz gebracht wird.

Die Vorteile dieser Gestaltung der Hauptschneidkanten nach Art eines Polygonzuges liegen darin, daß in dem Bereich zwischen den Punkten P2, P3 die Hauptschneidkante durch die anhand der Fig. 12, 13 bereits geschilderte Reduktion des Axialwinkels in Einbaulage verstärkt wird, was zu einer erhöhten Schneidkantenstabilität und Belastbarkeit des Werkzeugs führt. Der in den Bereich zwischen den Punkten P3 und P4 erhöhte Neigungswlnkel 45 der Hauptschneidkante (über deren Abschnitt 5a) führt zu einem ruhigeren Lauf des Werkzeuges und zu einem weicheren Schneiden, insbesondere dann, wenn schwer zerspanbare Werkstücke bearbeitet werden müssen.

Die Neben- oder Planschneidkanten 5c behalten jeweils ihre Funktion zur Erzeugung einer guten Oberflächenbeschaffenheit beim Stirnfräsen sowie einer echten 90°-Schulter in dem Werkstück. Im Bereiche der Eckradien 11 sind ebene Schneidkanten vorhanden, so daß bruchgefährdete Stellen vermieden sind.

Die beschriebenen Ausführungsbeispiele betreffen Wendeschneidplatten mit quadratischer Grundfläche 1 und vier nacheinander abarbeitbaren, gleichgestalteten Hauptschneiden an den vier Seiten des pyramidenstumpfförmigen Grundkörpers. Der erfindungsgemäße Gedanke kann aber auch auf Wendeschneidplatten mit rechteckiger Grundfläche angewandt werden, wobei sich dann an den Seiten des Rechteckes unterschiedlich lange Schneidkanten ergeben, so daß die Schneidplatte nur zweimal gewendet werden kann. In Einzelfällen wäre es auch vorstellbar, eine Schneidplatte einzusetzen, bei der lediglich eine Ecke der polygonalen Grundfläche erfindungsgemäß gestaltet ist.

## Patentansprüche

1. Schneidplatte, insbesondere Wendeschneidplatte mit einem polygonalen Grundkörper, der eine ebene Grundfläche (1) und eine von dieser beabstandete ebene oder strukturierte Oberseite (4) sowie eine Anzahl unter Ausbildung von Ecken (3) aneinander angrenzende Seitenflächen (2) aufweist und an dem randseitig wenigstens eine Hauptschneidkante (5, 5a, 5b) und eine Planschneidkante (5c) ausgebildet sind, die sich über einen Teil des Umfanges des Grundkörpers erstrecken und die durch Span- und Freiflächen (40; 18, 20, 25) an der Oberseite bzw. an den Seitenflächen begrenzt sind, dadurch gekennzeichnet, daß
- der Grundkörper an der Oberseite (4) an wenigstens einer Ecke (3) nach außen zu abfallend abgeschrägt ist, derart, daß an der Ecke ein begrenzter, gegenüber der Grundfläche (1) geneigter Bereich (9) ausgebildet ist,
auf einer Seite der Ecke (3) sich die Hauptschneidkante (5a, 5b) in den geneigten Bereich (9) bis in die Nähe der Ecke (3) fortsetzt,
auf der anderen Seite der Ecke (3) in dem geneigten Bereich (9) die Planschneidkante (5c) ausgebildet ist, die sich in wesentlichen an die Hauptschneidkante (5a, b) anschließt und
der in den geneigten Bereich (9) liegende Teil (5b) der Hauptschneidkante im wesentlichen höchstens die gleiche Länge wie die Planschneidkante (5c) aufweist.

2. Schneidplatte nach Anspruch 1, dadurch gekennzeichnet, daß der Grundkörper in der Draufsicht auf seine Oberseite (4) im wesentlichen rechteckig ist.

3. Schneidplatte nach Anspruch 1, dadurch gekennzeichnet, daß der Grundkörper in der Draufsicht auf seine Oberseite (4) im wesentlichen quadratisch ist.

4. Schneidplatte nach einem der vorhergehenden Ansprüche, dadurch gekennzeichnet, daß in der Oberseite (4) wenigstens eine der jeweiligen Schneidkante (5a, 5b; 5c) zugeordnete Spanmulde (30, 32) angeordnet ist.

5. Schneidplatte nach Anspruch 4, dadurch gekennzeichnet, daß der Grundkörper auf der Oberseite eine ringsum laufende schmale Fase (29) aufweist, die an die Schneidkante (5a, 5b; 5c) zumindest über einen Teil ihrer Länge innen anschließend eine Spanfläche bildet.

6. Schneidplatte nach Anspruch 5, dadurch gekennzeichnet, daß die Fase (29) zumindest streckenweise parallel zur Grundfläche (1) des Grundkörpers ausgerichtet ist.

7. Schneidplatte nach einen der vorhergehenden Ansprüche, dadurch gekennzeichnet, daß der geneigte Bereich (9) sich beidseitig der Winkelhalbierenden (10) der ihm zugeordneten Ecke (3) erstreckt.

8. Schneidplatte nach Anspruch 7, dadurch gekennzeichnet, daß der geneigte Bereich (9) im wesentlichen symmetrisch zu der Winkelhalbierenden (10) der Ecke (3) ausgebildet ist.

9. Schneidplatte nach Anspruch 7, dadurch gekennzeichnet, daß der geneigte Bereich (9) in der Draufsicht von Kanten (5b, 5c, 14) begrenzt ist, die im wesentlichen entsprechend den Seiten eines Dreiecks angeordnet sind und daß die Senkrechte (13) auf die der Ecke (3) gegenüberliegende Dreieckseite (14) mit der Winkelhalbierenden (10) der Ecke einen spitzen Winkel (15) einschließt.

10. Schneidplatte nach Anspruch 9, dadurch gekennzeichnet, daß der Winkel (15) zwischen 0° und ±60° liegt und vorzugsweise ca. ±15° beträgt.

11. Schneidplatte nach einem der vorhergehenden Ansprüche, dadurch gekennzeichnet, daß der geneigte Bereich (9) mit der Grundfläche (1) einen Neigungswinkel zwischen 1,5 und 30°, vorzugsweise von 2° bis 8° einschließt.

12. Schneidplatte nach einen der vorhergehenden Anspruche, dadurch gekennzeichnet, daß der geneigte Bereich (9) auf der Oberseite von einer im wesentlichen ebenen Fläche gebildet ist.

13. Schneidplatte nach einem der Ansprüche 1 bis 11, dadurch gekennzeichnet, daß der geneigte Bereich (9) auf der Oberseite durch wenigstens zwei Flächen gebildet ist.

14. Schneidplatte nach Anspruch 13, dadurch gekennzeichnet, daß die Flächen jeweils im wesentlichen eben und längs einer von der Ecke (3) ausgehenden, gegenüber der Grundfläche geneigten Geraden (beispielsweise der Winkelhalbierenden (10)) aneinander angrenzend ausgebildet sind und daß wenigstens eine der Flächen um die Gerade bezüglich der Grundfläche (1) gekippt angeordnet ist.

15. Schneidplatte nach einem der vorhergehenden Ansprüche, dadurch gekennzeichnet, daß der geneigte Bereich (9) auf der Oberseite (4) oder im Bereiche wenigstens einer Seitenfläche (Freifläche 25) teilweise von einer gekrümmten Fläche (bei 50) begrenzt ist.

16. Schneidplatte nach einem der vorhergehenden Ansprüche, dadurch gekennzeichnet, daß die Hauptschneidkante in ihrem außerhalb des geneigten Bereiches (9) liegenden Teil (5a) zumindest streckenweise in wesentlichen parallel zur Grundfläche (1) verlaufend ausgebildet ist.

17. Schneidplatte nach einen der Ansprüche 1 bis 15, dadurch gekennzeichnet, daß die Hauptschneidkante in ihren außerhalb des geneigten Bereiches (9) liegenden Teil (5a) zumindest streckenweise geneigt zur Grundfläche (1) verlaufend ausgebildet ist.

18. Schneidplatte nach einen der vorhergehenden Ansprüche, dadurch gekennzeichnet, daß die Hauptschneidkante (5a, 5b) als Polygonzug mit Abschnitten unterschiedlicher Neigung zur Grundfläche (1) und/oder gegebenenfalls verschieden orientierten geraden und/oder gekrümmten Abschnitten ausgebildet ist.

19. Schneidplatte nach Anspruch 18, dadurch gekennzeichnet, daß die Hauptschneidkante (5a, 5b) ausgehend von einem in dem geneigten Bereich liegenden ersten Punkt (P1) in der Nähe der Ecke (3) in einem bis zu einem zweiten Punkt (P3) in der Nähe der Begrenzung des geneigten Bereiches (9) sich erstreckenden ersten Abschnitt (5b) gegenüber der Grundfläche (1) ansteigend und sodann anschließend an den zweiten Punkt (P3) in einen zweiten Abschnitt (5a) bis zu einem dritten Punkt (P4) gegenüber der Grundfläche (1) fallend ausgebildet ist.

20. Schneidplatte nach Anspruch 19, dadurch gekennzeichnet, daß die Hauptschneidkante in dem ersten und in dem zweiten Abschnitt (5a, 5b) im wesentlichen in einer gemeinsamen Normalebene zu der Grundfläche (1) liegt.

21. Schneidplatte nach Anspruch 19 oder 20, dadurch gekennzeichnet, daß die Hauptschneidkante in den zweiten Abschnitt (5a) einen Winkel (45) von ca. 1,5° bis 8°, vorzugsweise ca. 3° mit der Grundfläche (1) einschließt.

22. Schneidplatte nach einem der Ansprüche 19 bis 21, dadurch gekennzeichnet, daß anschließend an den dritten Punkt (P4) die Schneidkante in einen dritten Abschnitt unter Ausbildung der Nebenschneidkante (5c) der benachbarten Ecke gegenüber der Grundfläche (1) bis zu einem vierten Punkt (P5) in der Nähe der Ecke ansteigend ausgebildet ist.

23. Schneidplatte nach einem der Ansprüche 19 und 21 oder 22, dadurch gekennzeichnet, daß die Nebenschneidkante (5c) einer Ecke und der anschließende Abschnitt (5a) der Hauptschneidkante einer benachbarten Ecke (3) in Normalebenen zur Grundfläche (1) liegen, die miteinander einen spitzen Winkel (ε) einschließen, um den die die Nebenschneidkante (5c) enthaltende Normalebene nach innen geschwenkt ist.

24. Schneidplatte nach Anspruch 23, dadurch gekennzeichnet, daß der Winkel (ε) ca. 0,1° bis 6° vorzugsweise 0,2° bis 2° beträgt.

25. Schneidplatte nach einen der Ansprüche 22 bis 24, dadurch gekennzeichnet, daß anschließend an den vierten Punkt (P5) die Schneidkante bis zu einen Eckpunkt (P6) in einen vierten Abschnitt abfallend bezüglich der Grundfläche (1) verläuft.

26. Schneidplatte nach einem der vorhergehenden Ansprüche, dadurch gekennzeichnet, daß ihre Ecken (3) gerundet oder mit Facetten ausgebildet sind.

27. Schneidplatte nach Anspruch 2 oder 3, dadurch gekennzeichnet, daß alle Ecken (3) in einer gemeinsamen zur Grundfläche (1) parallelen gedachten Ebene liegen, die von der Grundflache (1) beabstandet ist.

28. Schneidplatte nach einem der vorhergehenden Ansprüche, dadurch gekennzeichnet, daß der Freiwinkel der Hauptschneidkante zumindest in Eckbereich kleiner als der Freiwinkel (22) der Planschneidkante (5c) ist.

29. Schneidplatte nach Anspruch 23, dadurch gekennzeichnet, daß die der Planschneidkante (5c) zugeordnete Freifläche (25) einer Ecke (3) mit der Freifläche der an sie anschließenden Hauptschneidkante (5a) einen Winkel von vorzugsweise 0,1° bis 6° elnschließt, um den die Freifläche (25) der Planschneidkante (5c) nach innen geschwenkt ist.

30. Schneidplatte nach einem der vorhergehenden Ansprüche, dadurch gekennzeichnet, daß die Freifläche zumindest des in den geneigten Bereich (9) liegenden Teils (5b) der Hauptschneidkante einen der Hauptschneidkante (5a, 5b) benachbarten saumartigen Bereich (18) aufweist, der über einen zur Grundfläche hin sich erstreckenden zweiten Freiflächenbereich (20) seitlich vorsteht und dessen Freiwinkel kleiner oder höchstens gleich ist als bzw. wie der Freiwinkel (22) des zweiten Bereiches.

31. Schneidplatte nach Anspruch 30, dadurch gekennzeichnet, daß der Aufbau des saumartigen Freiflächenbereiches (18) - parallel zur Grundfläche (1) gemessen - zu der Ecke (3) hin zunehmend ist.

32. Schneidplatte nach einen der vorhergehenden Ansprüche, dadurch gekennzeichnet, daß der Grundkörper ringsumlaufend aneinander anschließende Haupt- und Nebenschneidkanten (5a, 5b, 5c) aufweist.

33. Schneidplatte nach einem der vorhergehenden Ansprüche, dadurch gekennzeichnet, daß die Länge des in dem abgeschrägten Bereich liegenden Teils (5b) der Hauptschneidkante 15 bis 30%, vorzugsweise ca. 20% der Länge der Hauptschneidkante beträgt.

34. Rundlaufendes Fräswerkzeug mit einem Werkzeugkörper, an dessen Umfang Ausnehmungen (38) zur Aufnahme von Schneidplatten angeordnet sind, die mit ihrer Grundfläche (1) jeweils auf einem Sitz (39) in der entsprechenden Ausnehmung aufliegend lagerichtig befes tigt sind, wobei jede der Schneidplatten entsprechend einem der vorhergehenden Ansprüche ausgebildet ist und bei dem die Schneidplatten jeweils mit einem pos itivem Axialwinkel (44) und einen negativen Radial winkel (45) eingesetzt sind, dadurch gekennzeichnet, daß der Axialwinkel und der Radialwinkel derart gewählt sind, daß der in den geneigten Bereich (9) liegende Abschnitt (5b) der umfangsseitig wirksamen Hauptschneidkante mit einem kleineren Axialwinkel arbeitet, als der außerhalb des geneigten Bereiches (9) liegende Teil (5a) der Haupt schneidkante und die zugehörige Planschneidkante (5c) in einer rechtwinklig zu der Drehachse des Werkzeug körpers (37) verlaufenden Planebene (34) liegt.

35. Werkzeug nach Anspruch 34, dadurch gekennzeichnet, daß der in dem geneigten Bereich (9) liegende Abschnitt (5b) der wirksamen Hauptschneidkante im wesentlichen parallel zu der Drehachse des Werkzeugkörpers (37), d.h. mit einem Axialwinkel von etwa 0° arbeitend angeordnet ist.

## Claims

1. Cutting insert, in particular an indexable cutting insert with a polygonal base body, which has a plane base (1) and a plane or structured upper side (4) arranged at a distance therefrom, as well as a number of adjoining side faces (2) forming corners (3), and on which body at least one main cutting edge (5, 5a, 5b) and a secondary cutting edge (5c) are provided on the edge side, which edges extend along part of the circumference of the base body and are defined at the upper side or at the side faces by rake faces and relief flanks (40; 18, 20, 25), characterised in that
the base body is tapered to slope downwards to the outside on at least one corner (3) on the upper side (4) in such a way that a restricted area (9) inclined in relation to the base (1) is formed at the corner;
on one side of the corner (3) the main cutting edge (5a, 5b) extends in the inclined area (9) up to the vicinity of the corner (3);
on the other side of the corner (3), the secondary cutting edge (5c) essentially adjoining the main cutting edge (5a,5b) is provided in the inclined area (9), and
the portion (5b) of the main cutting edge located in the inclined area (9) essentially has at most the same length as the secondary cutting edge (5c).

2. Cutting insert according to Claim 1, characterised in that the base body is essentially rectangular in top view onto its upper side (4).

3. Cutting insert according to Claim 1, characterised in that the base body is essentially square in top view onto its upper side (4).

4. Cutting insert according to one of the preceding claims, characterised in that at least one rake trough (30,32) allocated to the respective cutting edge (5a, 5b; 5c) is arranged in the upper side (4).

5. Cutting insert according to Claim 4, characterised in that the base body has a narrow circumferential chamfer (29) on the upper side which forms a rake face adjoining the cutting edge (5a, 5b; 5c) on the inside at least over part of its length.

6. Cutting insert according to Claim 5, characterised in that the chamfer (29) is aligned parallel to the base (1) of the base body at least in sections.

7. Cutting insert according to one of the preceding claims, characterised in that the inclined area (9) extends on both sides of the median line (10) of the corner (3) allocated to it.

8. Cutting insert according to Claim 7, characterised in that the inclined area (9) is arranged essentially symmetrically to the median line (10) of the corner (3).

9. Cutting insert according to Claim 7, characterised in that in top view the inclined area (9) is defined by edges (5b, 5c, 14), which are arranged so as to essentially correspond to the sides of a triangle; and that the vertical (13) onto the triangle side (14) opposite the corner (3) encloses an acute angle (15) with the median line (10) of the corner.

10. Cutting insert according to Claim 9, characterised in that the angle (15) lies between 0° and ±60°, and preferably amounts to about ±15°.

11. Cutting insert according to one of the preceding claims, characterised in that the inclined area (9) encloses an angle of inclination between 1.5° and 30°, preferably from 20° to 80°, with the base (1).

12. Cutting insert according to one of the preceding claims, characterised in that the inclined area (9) is formed on the upper side of an essentially plane surface.

13. Cutting insert according to one of Claims 1 to 11, characterised in that the inclined area (9) is formed on the upper side by at least two surfaces.

14. Cutting insert according to Claim 13, characterised in that the surfaces are respectively constructed essentially plane and to adjoin one another along a straight line (for example, the median line (10) extending from the corner (3) and inclined in relation to the base; and that at least one of the surfaces is arranged tilted around the straight line in relation to the base (1).

15. Cutting insert according to one of the preceding claims, characterised in that the inclined area (9) is partially defined by a curved face (at 50) on the upper side (4) or in the region of at least one side face (relief flank 25).

16. Cutting insert according to one of the preceding claims, characterised in that in its portion (5a) lying outside the inclined area (9), the main cutting edge is constructed to run essentially parallel to the base (1), at least in sections.

17. Cutting insert according to one of Claims 1 to 15, characterised in that in its portion (5a) lying outside the inclined area (9), the main cutting edge is constructed to run on an incline to the base (1), at least in sections.

18. Cutting insert according to one of the preceding claims, characterised in that the main cutting edge (5a, 5b) is constructed as a traverse with sections of different inclination to the base (1) and/or possibly differently oriented straight and/or curved sections.

19. Cutting insert according to Claim 18, characterised in that extending from a first point (P1) lying in the inclined area in the vicinity of the corner (3), the main cutting edge (5a, 5b) is constructed to slope upwards in relation to the base (1) in a first section (5b) extending as far as a second point (P3) in the vicinity of the boundary of the inclined area (9), and then adjoining the second point (P3) to slope downwards in relation to the base (1) in a second section (5a) as far as a third point (P4).

20. Cutting insert according to Claim 19, characterised in that in the first and the second section (5a, 5b), the main cutting edge lies essentially in a common normal plane to the base (1).

21. cutting insert according to Claim 19 or 20, characterised in that in the second section (5a), the main cutting edge encloses an angle (45) of approximately 1.5° to 8°, preferably approximately 3°, with the base (1).

22. Cutting insert according to one of Claims 19 to 21, characterised in that adjoining the third point (P4), in a third section to form the secondary cutting edge (5c) of the adjacent corner, the cutting edge is constructed to slope upwards in relation to the base (1) as far as a fourth point (P5) in the vicinity of the corner.

23. Cutting insert according to one of Claims 19 and 21 or 22, characterised in that the secondary cutting edge (5c) of a corner and the adjoining section (5a) of the main cutting edge of an adjacent corner (3) lie in normal planes to the base (1), which enclose an acute angle (2) with one another, around which the normal plane containing the secondary cutting edge (5c) is swivelled inwards.

24. Cutting insert according to Claim 23, characterised in that the angle (ε) amounts to approximately 0.1° to 6°, preferably 0.2° to 2°.

25. Cutting insert according to one of Claims 22 to 24, characterised in that adjoining the fourth point (P5), the cutting edge runs on a downward slope in relation to the base (1) as far as a corner point (P6) in a fourth section.

26. Cutting insert according to one of the preceding claims, characterised in that their corners (3) are rounded or provided with bevels.

27. Cutting insert according to Claim 2 or 3, characterised in that all the corners (3) lie in a common imaginary plane parallel to the base (1) located at a distance from the base (1).

28. Cutting insert according to one of the preceding claims, characterised in that the relief angle of the main cutting edge is smaller than the releif angle (22) of the secondary cutting edge (5c), at least in the corner region.

29. Cutting insert according to Claim 23, characterised in that the relief flank (25) of a corner (3) allocated to the secondary cutting edge (5c) encloses an angle of preferably 0.1° to 6° with the relief flank of the main cutting edge (5a) adjoining it, around said angle the relief flank (25) of the secondary cutting edge (5c) is swivelled inwards.

30. Cutting insert according to one of the preceding claims, characterised in that the relief flank at least of the portion (5b) of the main cutting edge located in the inclined area (9) has a seam-like area (18) adjacent to the main cutting edge (5a, 5b), which projects laterally over a second relief flank area (20) extending towards the base and the relief angle of which is smaller than, or at most equal to, the relief angle (22) of the second area.

31. Cutting insert according to Claim 30, characterised in that the structure of the seam-like relief flank area (18) - as measured parallel to the base (1) - increases towards the corner (3).

32. Cutting insert according to one of the preceding claims, characterised in that the base has main and secondary cutting edges (5a, 5b, 5c) adjoining one another circumferentially.

33. Cutting insert according to one of the preceding claims, characterised in that the length of the portion (5b) of the main cutting edge located in the sloping area amounts to 15 to 30%, preferably approximately 20%, of the length of the main cutting edge.

34. Rotating cutting tool with a tool body, on the circumference of which recesses (38) are arranged to receive cutting inserts, which are respectively secured at their base (1) on a seat (39) so as to lie thereon in the correct position in the corresponding recess, whereby each of the cutting inserts is constructed in accordance with one of the preceding claims, and wherein the cutting inserts are respectively used with a positive axial angle (44) and a negative radial angle (45), characterised in that the axial angle and the radial angle are selected so that the portion (5b) of the main cutting edge active on the circumference side located in the inclined area (9) operates with a smaller axial angle than the portion (5a) of the main cutting edge lying outside the inclined area (9), and the respective secondary cutting edge (5c) lies in a plane (34) running at right angles to the rotational axis of the tool body (37).

35. Tool according to Claim 34, characterised in that the portion (5b) of the active main cutting edge lying in the inclined area (9) is arranged essentially parallel to the rotational axis of the tool body (37), i.e. operating with an axial angle of about 0°.

## Revendications

1. Plaquette de coupe, notamment plaquette de coupe amovible, comportant un corps de base polygonal avec une surface de base (1) plane, une face supérieure (4) plane ou structurée distante de celle-ci et plusieurs faces latérales (2) qui sont mutuellement adjacentes et définissent des coins (3), et sur le bord duquel sont formées au moins une arête de coupe principale (5, 5a, 5b) et une arête de surfaçage (5c) qui s'étendent sur une partie du périmètre du corps de base et sont limitées par des faces de coupe et de dépouille (40; 18; 20, 25) sur la face supérieure et sur les faces latérales, caractérisée par le fait que
le corps de base, sur sa face supérieure (4), dans au moins un coin (3), est usiné en dévers en direction de l'extérieur de manière à former dans ledit coin une zone (9) en dévers par rapport à la surface de base (1),
d'un côté du sommet (3), l'arête de coupe principale (5a, 5b) se prolonge jusqu'au voisinage du sommet (3) dans la zone en dévers (9),
de l'autre côté du sommet (3), dans la zone en dévers (9), est formée l'arête de surfaçage (5c) qui se raccorde sensiblement à l'arête de coupe principale (5a, 5b) et
la partie (5b) de l'arête de coupe principale située dans la zone en dévers (9) a essentiellement au maximum la même longueur que l'arête de surfaçage (5c).

2. Plaquette de coupe selon la revendication 1, caractérisée par le fait que le corps de base, en vue de dessus sur sa face supérieure (4), a une forme essentiellement rectangulaire.

3. Plaquette de coupe selon la revendication 1, caractérisée par le fait que le corps de base, en vue de dessus sur sa face supérieure (4), a une forme essentiellement carrée.

4. Plaquette de coupe selon une des revendications précédentes, caractérisée par le fait qu'au moins un brise-copeau (30, 32) associé à l'arête de coupe (5a, 5b, 5c) concernée est aménagé dans la face supérieure (4).

5. Plaquette de coupe selon la revendication 4, caractérisée par le fait que le corps de base, sur sa face supérieure (4), présente un chanfrein (29) périphérique étroit qui forme une face de coupe adjacente côté intérieur à l'arête de coupe (5a, 5b, 5c), sur au moins une partie de celle-ci.

6. Plaquette de coupe selon la revendication 5, caractérisée par le fait que le chanfrein (29), par tronçons au moins, est parallèle à la surface de base (1) du corps de base.

7. Plaquette de coupe selon une des revendications précédentes, caractérisée par le fait que la zone en dévers (9) s'étend des deux côtés de la bissectrice (10) du coin (3) qui lui est associé.

8. Plaquette de coupe selon la revendication 7, caractérisée par le fait que la zone en dévers (9) est essentiellement symétrique par rapport à la bissectrice (10) du coin (3).

9. Plaquette de coupe selon la revendication 7, caractérisée par le fait que la zone en dévers (9), en vue de dessus, est délimitée par des arêtes (5b, 5c, 14) qui sont essentiellement disposées à la manire des côtés d'un triangle et par le fait que la normale (13) au côté (14) du triangle opposé au coin (3) forme un angle aigu (15) avec la bissectrice (10) du coin.

10. Plaquette de coupe selon la revendication 9, caractérisée par le fait que l'angle (15) est compris entre 0° et ± 60° et de préférence est d'environ ± 15°.

11. Plaquette de coupe selon une des revendications précédentes, caractérisée par le fait que la zone en dévers (9) forme avec la surface de base (1) un angle compris entre 1,5° et 30°, de préférence compris dans une plage allant de 2° à 8°.

12. Plaquette de coupe selon une des revendications précédentes, caractérisée par le fait que la zone en dévers (9) sur la face supérieure est formée par une surface essentiellement plane.

13. Plaquette de coupe selon une des revendications 1 à 11, caractérisée par le fait que la zone en dévers (9) sur la face supérieure est formée par au moins deux surfaces.

14. Plaquette de coupe selon la revendication 13, caractérisée par le fait que les surfaces sont chaque fois essentiellement planes et sont aménagées de manière mutuellement adjacente le long d'une droite partant du coin (3) (par exemple le long de la bissectrice (10)) inclinée par rapport à la surface de base et par le fait qu'au moins une des surfaces est basculée autour de la droite, par rapport à la surface de base (1).

15. Plaquette de coupe selon une des revendications précédentes, caractérisée par le fait que la zone en dévers (9) sur la face supérieure (4) ou dans la région d'au moins une face latérale (face de dépouille (25)) est partiellement limitée par une surface courbe (en 50).

16. Plaquette de coupe selon une des revendications précédentes, caractérisée par le fait que l'arête de coupe principale, dans sa partie (5a) en dehors de la zone en dévers (9), par endroits au moins, est sensiblement parallèle à la surface de base (1).

17. Plaquette de coupe selon une des revendications 1 à 15, caractérisée par le fait que l'arête de coupe principale dans sa partie (5a) en dehors de la zone en dévers (9), par endroits au moins, est inclinée par rapport à la surface de base (1).

18. Plaquette de coupe selon une des revendications précédentes, caractérisée par le fait que l'arête de coupe principale (5a, 5b) a la forme d'un polygone avec des tronçons qui présentent des inclinaisons différentes par rapport à la surface de base (1) et/ou avec des tronçons rectilignes ou courbes, le cas échéant orientés dans des directions différentes.

19. Plaquette de coupe selon la revendication 18, caractérisée par le fait que l'arête de coupe principale (5a, 5b), à partir d'un premier point (P1) situé dans la zone en dévers, dans la région du coin (3), dans un premier tronçon (5b) qui s'étend jusqu'à un deuxième point (P3) dans le voisinage de la limite de la zone en dévers (9), s'élève par rapport à la surface de base (1), puis derrière le deuxième point (P3), dans un deuxième tronçon (5a) qui s'étend jusqu'à un troisième point (P4), s'abaisse par rapport à la surface de base (1).

20. Plaquette de coupe selon la revendication 19, caractérisée par le fait que l'arête de coupe principale, dans le premier et dans le deuxième tronçon (5a, 5b), est essentiellement située dans un plan commun normal à la surface de base (1).

21. Plaquette de coupe selon la revendication 19 ou 20, caractérisée par le fait que l'arête de coupe principale, dans le deuxième tronçon (5a), forme un angle (45) d'environ 1,5° à 8°, de préférence d'environ 3°, avec la surface de base (1).

22. Plaquette de coupe selon une des revendications 19 à 21, caractérisée par le fait que derrière le troisième point (P4), l'arête de coupe, dans un troisième tronçon, s'élève par rapport à la surface de base (1) jusqu'à un quatrième point (P5) dans le voisinage du coin et forme l'arête de coupe complémentaire (5c) du coin voisin.

23. Plaquette de coupe selon une des revendications 19 et 21 ou 22, caractérisée par le fait que l'arête de coupe complémentaire (5c) d'un coin et le tronçon (5a) qui lui fait suite de l'arête de coupe principale d'un coin voisin (3) sont situés dans des plans normaux à la surface de base (1) qui forment entre eux un angle aigu (ε) dont la valeur correspond au basculement vers l'intérieur du plan normal contenant l'arête de coupe complémentaire (5c).

24. Plaquette de coupe selon la revendication 23, caractérisée par le fait que l'angle (ε) est d'environ 0,1° à 6°, de préférence de 0,2° à 2°.

25. Plaquette de coupe selon une des revendications 22 à 24, caractérisée par le fait que derrière le quatrième point (P5), l'arête de coupe s'abaisse par rapport à la surface de base (1) jusqu'à un point (P6) du coin.

26. Plaquette de coupe selon une des revendications précédentes, caractérisée par le fait que ses coins sont arrondis ou comportent des facettes.

27. Plaquette de coupe selon la revendication 2 ou 3, caractérisée par le fait que tous les coins (3) sont situés dans un plan imaginaire commun parallèle à la surface de base (1), distant de la surface de base (1).

28. Plaquette de coupe selon une des revendications précédentes, caractérisée par le fait que l'angle de dépouille de l'arête de coupe principale, au moins dans la région du coin, est inférieur à l'angle de dépouille (22) de l'arête de surfaçage (5c).

29. Plaquette de coupe selon la revendication 23, caractérisée par le fait que la face de dépouille associée à l'arête de surfaçage (5c) d'un coin (3) forme avec la face de dépouille de l'arête de coupe principale adjacente (5a) un angle de préférence de 0,1° à 6°, dont la valeur correspond au basculement en direction de l'intérieur de la face de dépouille (25) de l'arête de surfaçage (5c).

30. Plaquette de coupe selon une des revendications précédentes, caractérisée par le fait que la face de dépouille d'au moins la partie (5b) de l'arête de coupe principale située dans la zone en dévers (9) présente une zone (18) en forme d'ourlet voisine de l'arête principale (5a, 5b), qui avance latéralement par rapport à une deuxième zone de face de dépouille (20) s'étendant en direction de la surface de base et dont l'angle de dépouille est inférieur ou au maximum égal à l'angle de dépouille (22) de la deuxième zone.

31. Plaquette de coupe selon la revendication 30, caractérisée par le fait que la hauteur de la zone de face de dépouille (18) en forme d'ourlet - mesurée parallèlement à la surface de base (1) - croît en direction du coin (3).

32. Plaquette de coupe selon une des revendications précédentes, caractérisée par le fait que le corps de base comporte sur son pourtour des arêtes de coupe principales et des arêtes de coupe complémentaires (5a, 5b, 5c) adjacentes.

33. Plaquette de coupe selon une des revendications précédentes, caractérisée par le fait que la longueur de la partie (5b) de l'arête de coupe principale située dans la zone en dévers représente 15 à 30%, de préférence environ 20%, de la longueur de l'arête de coupe principale.

34. Fraise rotative comportant un corps d'outil sur le pourtour duquel sont aménagés des évidements (38) pour recevoir des plaquettes de coupe qui sont fixées en position avec leur surface de base (1) reposant sur un siège (39) dans l'évidement concerné, chaque plaquette de coupe étant conformée selon une des revendications précédentes et dans lequel les plaquettes de coupe sont montées avec un angle axial positif (44) et un angle radial négatif (45), caractérisée par le fait que l'angle axial positif et l'angle radial négatif sont choisis tels que le tronçon (5b) situé dans la zone en dévers (9) de l'arête de coupe principale active au niveau de la périphérie travaille avec un angle axial inférieur à celui de la partie (5a) de l'arête de coupe principale située en dehors de la zone en dévers (9) et que l'arête de surfaçage (5c) correspondante soit située dans un plan (34) perpendiculaire à l'axe de rotation du corps d'outil (37).

35. Outil selon la revendication 34, caractérisé par le fait que le tronçon (5b) de l'arête de coupe principale active situé dan la zone en dévers (9) est disposé essentiellement parallèlement à l'axe de rotation du corps d'outil (37) c'est-à-dire travaille avec un angle axial d'environ 0°.
